# EUROPEAN PATENT APPLICATION

(11) **EP 4 472 291 A1**
(43) Date of publication of application: **04.12.2024**
(21) Application number: 23746301.3
(22) Date of filing: 20.01.2023
(51) Int. Cl.: H04W 48/08

(54) **DISASTER ROAMING CONTROL METHOD AND APPARATUS, TERMINAL, AND NETWORK SIDE DEVICE**

(30) Priority: 27.01.2022 CN 202210103118
(71) Applicant: VIVO MOBILE COMMUNICATION CO., LTD., Dongguan, Guangdong 523863 (CN)
(72) Inventor: ZHANG, Yizhong, Dongguan, Guangdong 523863 (CN); WANG, Wen, Dongguan, Guangdong 523863 (CN)
(74) Representative: Lavoix
(86) International application number: PCT/CN2023/073283
(87) International publication number: WO 2023/143422

(57) **Abstract**

This application discloses a disaster roaming control method and apparatus, a terminal, and a network side device, and relates to the field of communication technologies. The disaster roaming control method in embodiments of this application includes: A terminal receives first indication information, where the first indication information indicates to disable disaster roaming; and the terminal performs a first operation based on the first indication information, where the first operation includes at least one of the following: deleting a disaster roaming-related terminal context; initiating a deregistration process; receiving a first message, where the first message includes at least one of the following: a terminal configuration update message, a deregistration request message, and a NAS rejection message; and selecting a PLMN.

## Description

### CROSS-REFERENCE TO RELATED APPLICATIONS

This application claims priority to Chinese Patent Application No. 202210103118.1 filed on January 27, 2022, which is incorporated herein by reference in its entirety.

### TECHNICAL FIELD

This application relates to the field of communication technologies, and specifically, to a disaster roaming control method and apparatus, a terminal, and a network side device.

### BACKGROUND

In a minimization of service interruption (Minimization of Service Interruption, MINT) scenario, a network side may allow a terminal to perform disaster roaming, or may not allow a terminal to perform disaster roaming. However, in a case in which the terminal is not allowed to perform disaster roaming, a behavior of the terminal is currently unclear.

### SUMMARY

Embodiments of this application provide a disaster roaming control method and apparatus, a terminal, and a network side device to resolve a problem that a behavior of the terminal is unclear in a case in which the terminal is not allowed to perform disaster roaming.

According to a first aspect, a disaster roaming control method is provided, applied to a terminal. The method includes:
The terminal receives first indication information, where the first indication information indicates to disable disaster roaming; and
the terminal performs a first operation based on the first indication information, where
the first operation includes at least one of the following:
   deleting a disaster roaming-related terminal context;
   initiating a deregistration process;
   receiving a first message, where the first message includes at least one of the following: a terminal configuration update message, a deregistration request message, and a non-access stratum (Non-Access Stratum, NAS) rejection message; and
   selecting a public land mobile network (Public Land Mobile Network, PLMN).

According to a second aspect, a disaster roaming control method is provided, applied to a first network side device. The method includes:
The first network side device sends first indication information to a terminal, where the first indication information indicates the terminal to disable the disaster roaming.

According to a third aspect, a disaster roaming control method is provided, applied to a second network side device. The method includes:
The second network side device receives second indication information, where the second indication information indicates to disable disaster roaming by using a terminal; and
the second network side device performs a second operation based on the second indication information, where
the second operation includes at least one of the following:
   sending a first message, where the first message includes at least one of the following: a terminal configuration update message, a deregistration request message, and a NAS rejection message;
   skipping sending a second disaster roaming list provided by a visited public land mobile network (Visited Public Land Mobile Network, VPLMN), or sending an empty second disaster roaming list provided by a VPLMN; and
   deleting a disaster roaming-related terminal context.

According to a fourth aspect, a disaster roaming control apparatus is provided, applied to a terminal. The apparatus includes:
a first receiving module, configured to receive first indication information, where the first indication information indicates the terminal to disable disaster roaming; and
a first execution module, configured to perform a first operation based on the first indication information, where
the first operation includes at least one of the following:
   deleting a disaster roaming-related terminal context;
   initiating a deregistration process;
   receiving a first message, where the first message includes at least one of the following: a terminal configuration update message, a deregistration request message, and a NAS rejection message; and
   selecting a PLMN.

According to a fifth aspect, a disaster roaming control apparatus is provided, applied to a first network side device. The apparatus includes:
a first sending module, configured to send first indication information to a terminal, where the first indication information indicates the terminal to disable disaster roaming.

According to a sixth aspect, a disaster roaming control apparatus is provided, applied to a second network side device. The apparatus includes:
a second receiving module, configured to receive second indication information, where the second indication information indicates a terminal to disable disaster roaming; and
a second execution module, configured to perform a second operation based on the second indication information, where
the second operation includes at least one of the following:
   sending a first message, where the first message includes at least one of the following: a terminal configuration update message, a deregistration request message, and a NAS rejection message;
   skipping sending a second disaster roaming list provided by a VPLMN, or sending an empty second disaster roaming list provided by a VPLMN; and
   deleting a disaster roaming-related terminal context.

According to a seventh aspect, a terminal is provided. The terminal includes a processor and a memory. The memory stores a program or instructions that can be run on the processor. When the program or instructions are executed by the processor, a step of the method according to the first aspect is implemented.

According to an eighth aspect, a terminal is provided, including a processor and a communication interface. The communication interface is configured to receive first indication information, where the first indication information indicates the terminal to disable disaster roaming. The processor is configured to perform a first operation based on the first indication information, where the first operation includes at least one of the following: deleting a disaster roaming-related terminal context; initiating a deregistration process; receiving a first message, where the first message includes at least one of the following: a terminal configuration update message, a deregistration request message, and a NAS rejection message; and selecting a PLMN.

According to a ninth aspect, a network side device is provided. The network side device includes a processor and a memory. The memory stores a program or instructions that can be run on the processor. When the program or instructions are executed by the processor, a step of the method according to the first aspect or a step of the method according to the third aspect is implemented.

According to a tenth aspect, a network side device is provided, including a processor and a communication interface. For example, the network side device is a first network side device, and the communication interface is configured to send first indication information to a terminal, where the first indication information indicates the terminal to disable disaster roaming; or the network side device is a second network side device, the communication interface is configured to receive second indication information, where the second indication information indicates the terminal to disable disaster roaming, and the processor is configured to perform a second operation based on the second indication information, where the second operation includes at least one of the following: sending a first message, where the first message includes at least one of the following: a terminal configuration update message, a deregistration request message, and a NAS rejection message; skipping sending a second disaster roaming list provided by a VPLMN, or sending an empty second disaster roaming list provided by a VPLMN; and deleting a disaster roaming-related terminal context.

According to an eleventh aspect, a communication system is provided, including at least one of a terminal, a first network side device, and a second network side device. The terminal may be configured to perform a step of the method according to the first aspect. The first network side device may be configured to perform a step of the method according to the second aspect. The second network side device may be configured to perform a step of the method according to the third aspect.

According to a twelfth aspect, a readable storage medium is provided. The readable storage medium stores a program or instructions. When the program or instructions are executed by the processor, a step of the method according to the first aspect is implemented, a step of the method according to the second aspect is implemented, or a step of the method according to the third aspect is implemented.

According to a thirteenth aspect, a chip is provided. The chip includes a processor and a communication interface. The communication interface is coupled to the processor. The processor is configured to run a program or instructions to implement a step of the method according to the first aspect, a step of the method according to the second aspect, or a step of the method according to the third aspect.

According to a fourteenth aspect, a computer program/program product is provided. The computer program/program product is stored in a storage medium. The computer program/program product is executed by at least one processor to implement a step of the method according to the first aspect, a step of the method according to the second aspect, or a step of the method according to the third aspect.

In the embodiments of this application, after receiving the first indication information, the terminal may perform the first operation based on the first indication information. The first indication information indicates the terminal to disable disaster roaming. The first operation includes at least one of the following: deleting the disaster roaming-related terminal context; initiating the deregistration process; receiving the first message, where the first message includes at least one of the following: the terminal configuration update message, the deregistration request message, and the NAS rejection message; and selecting the PLMN. In this way, the terminal disables disaster roaming, in other words, in a case in which the terminal is not allowed to perform disaster roaming, a behavior of the terminal can be clarified. Further, by deleting the disaster roaming-related terminal context, a storage resource of the terminal can be saved; and/or by initiating the deregistration process, receiving the first message, and/or selecting the PLMN, the terminal can be prevented from residing in a forbidden network.

### BRIEF DESCRIPTION OF THE DRAWINGS

FIG. 1 is a block diagram of a wireless communication system to which an embodiment of this application can be applied;
FIG. 2 is a flowchart of a disaster roaming control method according to an embodiment of this application;
FIG. 3 is a flowchart of another disaster roaming control method according to an embodiment of this application;
FIG. 4 is a flowchart of another disaster roaming control method according to an embodiment of this application;
FIG. 5 is a diagram of a disaster roaming control process in a scenario 1 according to an embodiment of this application;
FIG. 6 is a diagram of a disaster roaming control process in a scenario 2 according to an embodiment of this application;
FIG. 7 is a diagram of a disaster roaming control process in a scenario 3 according to an embodiment of this application;
FIG. 8 is a diagram of a structure of a disaster roaming control apparatus according to an embodiment of this application;
FIG. 9 is a diagram of a structure of another disaster roaming control apparatus according to an embodiment of this application;
FIG. 10 is a diagram of a structure of another disaster roaming control apparatus according to an embodiment of this application;
FIG. 11 is a diagram of a structure of a communication device according to an embodiment of this application;
FIG. 12 is a diagram of a structure of a terminal according to an embodiment of this application; and
FIG. 13 is a diagram of a structure of a network side device according to an embodiment of this application.

### DETAILED DESCRIPTION

The following clearly describes technical solutions in embodiments of this application with reference to the accompanying drawings in the embodiments of this application. Obviously, the described embodiments are a part rather than all of embodiments of this application. All other embodiments obtained by a person of ordinary skill in the art based on the embodiments of this application shall fall within the protection scope of this application.

In the specification and claims of this application, the terms such as "first" and "second" are used to distinguish between similar objects but do not indicate a particular order or sequence. It is to be understood that the terms used in such ways are interchangeable under appropriate circumstances, so that the embodiments of this application can be implemented in sequences other than those illustrated or described herein. In addition, the objects distinguished by "first" and "second" are usually of the same type, and a quantity of objects is not limited. For example, there may be one or a plurality of first objects. In addition, "and/or" used in this specification and the claims indicates at least one of the connected objects. The character "/" generally indicates an "or" relationship between associated objects.

It should be noted that the technologies described in the embodiments of this application are not limited to a long term evolution (Long Term Evolution, LTE)/LTE-advanced (LTE-Advanced, LTE-A) system, and may further be applied to other wireless communication systems, for example, a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, and another system. The terms "system" and "network" in the embodiments of this application are often used interchangeably, and the described technologies not only can be applied to the foregoing systems and wireless technologies, but also can be applied to other systems and wireless technologies. The following describes a new radio (New Radio, NR) system for an illustration purpose, and NR terminologies are used in most of the following descriptions, but these technologies can also be applied to an application other than an NR system application, for example, a sixth generation (6^{th} Generation, 6G) communication system.

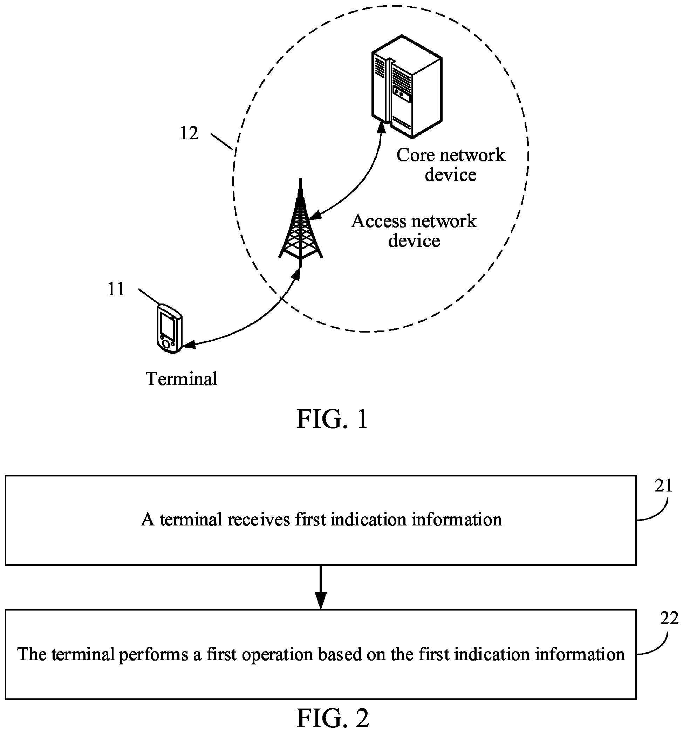

FIG. 1 is a block diagram of a wireless communication system to which an embodiment of this application can be applied. The wireless communication system includes a terminal 11 and a network side device 12. The terminal 11 may be a terminal side device such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/a virtual reality (virtual reality, VR) device, a robot, a wearable device (Wearable Device), an in-vehicle device (Vehicle User Equipment, VUE), a pedestrian terminal (Pedestrian User Equipment, PUE), a smart household (a home device having a wireless communication function, such as a refrigerator, a television, a washing machine, or furniture), a game machine, a personal computer (personal computer, PC), a teller machine, or a self-service machine. Wearable devices include: a smart watch, a smart bracelet, a smart headset, smart glasses, smart jewelry (a smart bangle, a smart brace lace, a smart ring, a smart necklace, a smart anklet, or a smart ankle chain), a smart wristband, and smart clothing. It should be noted that a specific type of the terminal 11 is not limited in this embodiment of this application. The network side device 12 may include an access network device or a core network device. The access network device may also be referred to as a radio access network device, a radio access network (Radio Access Network, RAN), a radio access network function, or a radio access network unit. The access network device may include a base station, a wireless local area network (Wireless Local Area Network, WLAN) access point, a Wi-Fi node, or the like. The base station may be referred to as a NodeB, an evolved NodeB (eNB), an access point, a base transceiver station (Base Transceiver Station, BTS), a radio station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another appropriate term in the field. The base station is not limited to a particular term provided that a same technical effect can be achieved. It should be noted that in this embodiment of this application, the base station in the NR system is merely used as an example for description, and is not intended to limit a specific type of the base station. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that in this embodiment of this application, the core network device in the NR system is merely used as an example, and is not intended to limit a specific type of the core network device.

In this embodiment of this application, disaster roaming may also be briefly referred to as DC (disaster condition) roaming. Disaster roaming indication information may also be briefly referred to as DC indication information. Code of a disaster roaming equipment indicator (Disaster Roaming Equipment Indicator, DREI) in the disaster roaming indication information is enable (enable)/disable (disable), which may also be briefly referred to as that the terminal enables (enable)/disables (disable) disaster roaming. A disaster inbound roamer (Disaster Inbound Roamer) is sometimes briefly referred to as UE.

In some embodiments, initiating a deregistration process may also be referred to as: initiating a deregistration request message, sending a deregistration request message, or the like.

In this embodiment of this application, the following problems further need to be resolved for disaster roaming:
Problem 1: UE has performed disaster roaming. If a home public land mobile network (Home Public Land Mobile Network, HPLMN) needs the UE to update the disaster roaming indication as disable, what behaviors of the UE and a network are.

The problem 1 corresponds to a scenario 1. The scenario 1 is, for example, a disaster happens to the HPLMN, the HPLMN and a PLMN-1 have a disaster roaming agreement, and the UE roams to the PLMN-1 for disaster roaming.

In this scenario, the HPLMN first configures enabling disaster roaming for the UE. After disaster roaming occurs, the UE performs disaster roaming based on an enable indication. Subsequently, because, for example, the disaster roaming agreement (agreement) of the HPLMN and the PLMN-1 changes, or subscription information of the UE changes, and the HPLMN does not want the UE to continue using disaster roaming, what behaviors of the UE and the network are.

Problem 2: In a roaming scenario, the UE has performed disaster roaming. If the HPLMN needs the UE to update the disaster roaming indication into disable, what behaviors of the UE and the network are.

The problem 2 corresponds to a scenario 2. The scenario 2 is, for example, the UE normally roams from the HPLMN to a visited public land mobile network (Visited Public Land Mobile Network, VPLMN)-1. In this case, a disaster happens to the VPLMN-1, the VPLMN-1 and a PLMN-2 have a disaster roaming agreement, and the UE roams to the PLMN-2 for disaster roaming.

In this scenario, the HPLMN first configures enabling disaster roaming for the UE. The UE normally roams to the VPLMN-1. After disaster roaming occurs, the UE performs disaster roaming based on an enable indication, and performs disaster registration on the PLMN-2. Subsequently, because, for example, the disaster roaming agreement (agreement) of the VPLMN-1 and the PLMN-2 changes, or subscription information of the UE changes, and the HPLMN does not want the UE to continue using disaster roaming, what behaviors of the UE and the network are.

Problem 3: The UE has not performed disaster roaming. In a roaming scenario, if the HPLMN needs the UE to update the disaster roaming indication into disable, what behaviors of the UE and the network are.

The problem 3 corresponds to a scenario 3. The scenario 3 is, for example, the UE normally roams from the HPLMN to the VPLMN-1. In this case, the UE has not performed disaster roaming. Next, because, for example, the subscription information of the UE changes, and the HPLMN does not want the UE to continue enabling disaster roaming, what behaviors of the UE and the network are.

With reference to the accompanying drawings, the disaster roaming control method and apparatus, the terminal, and the network side device that are provided in the embodiments of this application are described in detail below by using some embodiments and application scenarios.

FIG. 2 is a flowchart of a disaster roaming control method according to an embodiment of this application. The method is performed by a terminal. As shown in FIG. 2, the method includes the following steps.

Step 21: The terminal receives first indication information.

In this embodiment, the first indication information indicates the terminal to disable (disable) disaster roaming. The disabling disaster roaming may be understood as not allowing the terminal to perform disaster roaming.

In some embodiments, the terminal may receive the first indication information from an HPLMN. The receiving the first indication information from an HPLMN may be understood as receiving the first indication information from a network function of the HPLMN.

Step 22: The terminal performs a first operation based on the first indication information.

Optionally, the first operation may include at least one of the following:
deleting a disaster roaming-related terminal context, to avoid continuing storing the disaster roaming-related terminal context in a case of disabling disaster roaming, thereby saving a storage resource of the terminal;
initiating a deregistration process, to prevent the terminal from residing in a forbidden network;
receiving a first message, to prevent the terminal from residing in the forbidden network, where the first message includes at least one of the following: a terminal configuration update message, a deregistration request message, and a non-access stratum (Non-Access Stratum, NAS) rejection message; and
selecting a public land mobile network (Public Land Mobile Network, PLMN), to prevent the terminal from residing in the forbidden network.

In some embodiments, the first message is a NAS message. It should be noted that if the terminal wants to receive the NAS message, the terminal needs to be in a connected mode, for example, a 5G mobility management (Mobility Management, MM)-CONNECTED mode. If the terminal is in an idle mode, for example, a 5GMM-IDLE mode, whether a network pages the terminal depends on a policy of the network or a local configuration of the network.

In some embodiments, after performing a high-priority network searching, the terminal selects the PLMN. For example, when the terminal is in the idle mode, for example, the 5GMM-IDLE mode, the terminal finds another PLMN (including an available PLMN and a forbidden PLMN) through high-priority network searching, and then selects the PLMN.

In some embodiments, the terminal may select the PLMN in a 5GMM-registered (REGISTERED) mode or a 5GMM-deregistered (DEREGISTERED) mode.

In some embodiments, in the scenario 1 or scenario 2, after receiving the first indication information, the terminal may perform at least one of the following: deleting the disaster roaming-related terminal context, initiating the deregistration process, receiving the first message, and selecting the PLMN.

In some other embodiments, in the scenario 3, after receiving the first indication information, the terminal may delete the disaster roaming-related terminal context.

In addition, it should be noted that in a case in which the terminal has not received the first indication information, the terminal may receive the first message from the network (for example, the PLMN-1 or the PLMN-2) to which the terminal performs disaster roaming, that is, receive the terminal configuration update message, the deregistration request message, and/or the NAS rejection message to avoid residing in the forbidden network. In this case, the PLMN-1 or the PLMN-2 has received second indication information that is sent by the HPLMN and that indicates the terminal to disable disaster roaming.

According the disaster roaming control method in this embodiment of this application, after receiving the first indication information, the terminal may perform the first operation based on the first indication information. The first indication information indicates the terminal to disable disaster roaming. The first operation includes at least one of the following: deleting the disaster roaming-related terminal context; initiating the deregistration process; receiving the first message, where the first message includes at least one of the following: the terminal configuration update message, the deregistration request message, and the NAS rejection message; and selecting the PLMN. In this way, the terminal disables disaster roaming, in other words, in a case in which the terminal is not allowed to perform disaster roaming, a behavior of the terminal can be clarified. Further, by deleting the disaster roaming-related terminal context, a storage resource of the terminal can be saved; and/or by initiating the deregistration process, receiving the first message, and/or selecting the PLMN, the terminal can be prevented from residing in a forbidden network.

Optionally, the initiating the deregistration process may include: In a case in which the terminal is executing a first service, the terminal initiates the deregistration process after the first service ends. The first service may be set based on an actual requirement, for example, may be a terminal-specific service. In this way, a case in which the first service that is being executed by the terminal is interrupted due to initiation of the deregistration process can be avoided.

In some embodiments, the first service may include at least one of the following: an emergency protocol data unit (Protocol Data Unit, PDU) session and a high-priority service. For example, after receiving the first indication information, if the terminal is performing an emergency PDU session and/or a high-priority service, the terminal initiates the deregistration process after the emergency PDU session is released and/or the high-priority service ends.

In this embodiment of this application, to avoid affecting the terminal to obtain a required service, the disaster roaming-related terminal context may be deleted in an appropriate occasion. The deleting the disaster roaming-related terminal context may include at least one of the following:
(1) After sending a deregistration accept message, the terminal deletes the disaster roaming-related terminal context; that is, after accepting a deregistration message, the terminal deletes the disaster roaming-related terminal context.
(2) After successfully selecting the PLMN, the terminal deletes the disaster roaming-related terminal context.
(3) After successfully registering with a first PLMN, the terminal deletes the disaster roaming-related terminal context, where the first PLMN is another PLMN different from a PLMN in which the terminal resides.
(4) After a first timer expires (expire), the terminal deletes the disaster roaming-related terminal context. The first timer is a timer within an implementation range of the terminal, and duration of the first timer depends on implementation of the terminal. The first timer is not limited to controlling to delete the disaster roaming-related terminal context, and may further be used to control another process. For example, the first timer is used to control a time at which the terminal selects the PLMN. After the first timer expires, the terminal selects the PLMN, and deletes the disaster roaming-related terminal context.

Optionally, the disaster roaming-related terminal context may include a disaster roaming-related configuration parameter. The disaster roaming-related configuration parameter may include at least one of the following:
--a disaster roaming indication, where the disaster roaming indication indicates whether the terminal supports a disaster roaming service;
--a first disaster roaming list provided by the HPLMN, where, for example, the first disaster roaming list includes one or more entries (entry), each entry includes one PLMN identity (Identity, ID), and the first disaster roaming list is sorted in descending order, to be specific, a PLMN ranked at the front of the list has a higher priority;
--a second disaster roaming list provided by the VPLMN, where, for example, the second disaster roaming list includes one or more entries (entry), each entry includes one PLMN ID, and the second disaster roaming list is sorted in descending order, to be specific, a PLMN ranked at the front of the list has a higher priority;
--a disaster roaming wait range, where, for example, the disaster roaming wait range includes a minimum wait time and a maximum wait time, and the disaster roaming wait range is used by the terminal to access a network providing disaster roaming; and
--a disaster return wait range, where, for example, the disaster return wait range includes a minimum wait time and a maximum wait time, and the disaster return wait range is used by the terminal to return a network in which a disaster happens.

Optionally, the disaster roaming-related terminal context may further include a terminal context of a network in which the terminal is located after performing disaster roaming, for example, a globally unique temporary UE identity (Globally Unique Temporary UE Identity, GUTI) assigned by the network or disaster roaming area information. The disaster roaming area information is, for example, a tracking area (Tracking Area, TA) list (TA list) or a cell identity (cell ID).

It should be noted that for a disaster roaming-related configuration parameter, the HPLMN and/or the VPLMN may perform a disaster-related parameter configuration for the terminal.

Optionally, the terminal configuration update message may include third indication information, where the third indication information indicates at least one of the following:
disaster roaming not allowed (for example, disaster condition not allowed);
disaster roaming network unavailable (for example, PLMN with disaster condition not allowed);
network unavailable (for example, PLMN not allowed); and
service not allowed (service not allowed).

In this way, the terminal may learn of a configuration update reason by using the third indication information in the terminal configuration update message.

It should be noted that content indicated by the third indication information may be direct or indirect. For example, the third indication information may directly indicate disaster roaming not allowed/disaster roaming network unavailable, or may indicate current network unavailable/service not allowed.

In some embodiments, the third indication information includes one or more cause values. For example, the cause value is a newly added cause value, indicating at least one of the following: disaster roaming not allowed and disaster roaming network unavailable; or the cause value is an existing cause value, indicating at least one of the following: network unavailable and service not allowed.

Optionally, the terminal configuration update message may include: an empty second disaster roaming list provided by the VPLMN indicating the terminal to disable disaster roaming. For example, if the VPLMN has provided a disaster roaming list, an empty disaster roaming list is used for update for the terminal by using the terminal configuration update message.

Optionally, the receiving first indication information may include any one of the following:
(1) The terminal receives the first indication information by using user equipment parameter update (UE Parameters Update, UPU) information. For example, the UPU information may be a message in a UPU process, or may be a payload container (payload container) in a UPU process. This is not limited herein.
(2) The terminal receives the first indication information by using steering of roaming (Steering of Roaming, SOR) information. For example, the SOR information may be a message in an SOR process, or may be a payload container (payload container) in an SOR process. This is not limited herein.

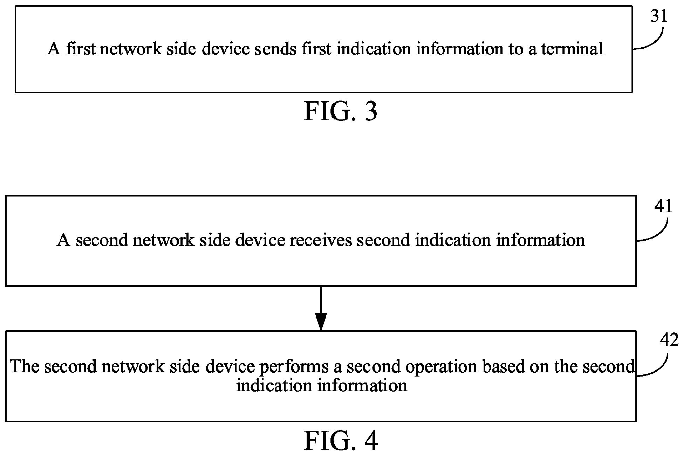

FIG. 3 is a flowchart of a disaster roaming control method according to an embodiment of this application. The method is performed by a first network side device. The first network side device is, for example, a network function in an HPLMN. The network function is, for example, a UDM, an AMF, or an SMF. As shown in FIG. 3, the method includes the following steps.

Step 31: The first network side device sends first indication information to a terminal.

In this embodiment, the first indication information indicates the terminal to disable (disable) disaster roaming. The disabling disaster roaming may be understood as not allowing the terminal to perform disaster roaming. The first indication information indicates the terminal to perform a first operation. The first operation may include at least one of the following:
deleting a disaster roaming-related terminal context, to avoid continuing storing the disaster roaming-related terminal context in a case of disabling disaster roaming, thereby saving a storage resource of the terminal;
initiating a deregistration process, to prevent the terminal from residing in a forbidden network;
receiving a first message, to prevent the terminal from residing in the forbidden network, where the first message includes at least one of the following: a terminal configuration update message, a deregistration request message, and a NAS rejection message; and
selecting a PLMN, to prevent the terminal from residing in the forbidden network.

According to the disaster roaming control method in this embodiment of this application, by sending the first indication information to the terminal, the terminal may be enabled to perform the first operation. The first indication information indicates the terminal to disable disaster roaming. In this way, the terminal disables disaster roaming, in other words, in a case in which the terminal is not allowed to perform disaster roaming, a behavior of the terminal can be clarified. Further, by deleting the disaster roaming-related terminal context, a storage resource of the terminal can be saved; and/or by initiating the deregistration process, receiving the first message, and/or selecting the PLMN, the terminal can be prevented from residing in a forbidden network.

Optionally, the control method may further include: The first network side device sends second indication information to a second network side device, where the second indication information indicates the terminal to disable disaster roaming. The second network side device is, for example, a network function in a PLMN in which the terminal is located after performing disaster roaming. The network function is, for example, a UDM, an AMF, or an SMF.

In some embodiments, to indicate the terminal disabling disaster roaming, the second indication information may include identification information of the terminal. The identification information of the terminal is optionally at least one of the following: a GUTI, a subscription concealed identifier (Subscription Concealed Identifier, SUCI), a permanent equipment identifier (Permanent Equipment Identifier, PEI), a temporary mobile subscription identifier (Temporary Mobile Subscription Identifier, TMSI), a generic public subscription identifier (Generic Public Subscription Identifier, GPSI), an international mobile station equipment identity (International Mobile station Equipment Identity, IMEI), an international mobile subscriber identity (International Mobile Subscriber Identity, IMSI), and the like.

Optionally, the sending first indication information to a terminal may include any one of the following:
(1) The first network side device sends the first indication information to the terminal by using UPU information. For example, the UPU information may be a message in a UPU process, or may be a payload container (payload container) in a UPU process. This is not limited herein.
(2) The first network side device sends the first indication information to the terminal by using SOR information. For example, the SOR information may be a message in an SOR process, or may be a payload container (payload container) in an SOR process. This is not limited herein.

Optionally, before sending the first indication information to the terminal, the first network side device may send a first configuration information to the terminal. The first configuration information is used to indicate a disaster-related parameter of the terminal. For example, the disaster-related parameter may include at least one of the following:
--a disaster roaming indication, where the disaster roaming indication indicates whether the terminal supports a disaster roaming service;
--a first disaster roaming list provided by an HPLMN, where, for example, the first disaster roaming list includes one or more entries (entry), each entry includes one PLMN ID, and the first disaster roaming list is sorted in descending order, to be specific, a PLMN ranked at the front of the list has a higher priority;
--a disaster roaming wait range, where, for example, the disaster roaming wait range includes a minimum wait time and a maximum wait time, and the disaster roaming wait range is used by the terminal to access a network providing disaster roaming; and
--a disaster return wait range, where, for example, the disaster return wait range includes a minimum wait time and a maximum wait time, and the disaster return wait range is used by the terminal to return a network in which a disaster happens.

FIG. 4 is a flowchart of a disaster roaming control method according to an embodiment of this application. The method is performed by a second network side device. The second network side device is, for example, a network function in a PLMN (for example, a VPLMN-1 or a VPLMN-2) in which a terminal is located after performing disaster roaming. The network function is, for example, a UDM, an AMF, or an SMF. As shown in FIG. 4, the method includes the following steps.

Step 41: The second network side device receives second indication information.

In this embodiment, the second indication information indicates the terminal to disable (disable) disaster roaming. The disabling disaster roaming may be understood as not allowing the terminal to perform disaster roaming.

Step 42: The second network side device performs a second operation based on the second indication information.

Optionally, the second operation may include at least one of the following:
sending a first message, to prevent the terminal from residing in a forbidden network, where the first message includes at least one of the following: a terminal configuration update message, a deregistration request message, and a NAS rejection message; and
skipping sending a second disaster roaming list provided by a VPLMN, or sending an empty second disaster roaming list provided by a VPLMN, to prevent the terminal from residing in the forbidden network; and
deleting a disaster roaming-related terminal context, to avoid continuing storing the disaster roaming-related terminal context in a case of disabling disaster roaming, thereby saving a storage resource of the terminal.

In some embodiments, the first message is a NAS message. It should be noted that if the terminal wants to receive the NAS message, the terminal needs to be in a connected mode, for example, a 5GMM-CONNECTED mode. If the terminal is in an idle mode, for example, a 5GMM-IDLE mode, whether a network pages the terminal depends on a policy of the network or a local configuration of the network.

In some embodiments, for the second operation, the second disaster roaming list provided by the VPLMN may not be sent to the terminal, or the empty second disaster roaming list provided by the VPLMN may be sent to the terminal. For example, if the VPLMN has provided a disaster roaming list, an empty disaster roaming list provided by the VPLMN is used for update.

In some embodiments, if the second disaster roaming list provided by the VPLMN is not sent to the terminal, the VPLMN may send indication information. The indication information indicates that the disaster roaming list that is used in a disaster condition (disaster condition) and that is provided by the VPLMN is false (false) or is set to disabled (disable).

In some embodiments, the sending a first message is specifically: sending the first message to the terminal.

It should be noted that when the second network side device sends the first message to the terminal, the terminal may or may not receive first indication information. This is not limited herein. That is, in a case in which the terminal has not received the first indication information, the terminal may further receive the first message from the second network side device, that is, receive the terminal configuration update message, the deregistration request message, and/or the NAS rejection message, to avoid residing in the forbidden network.

According to the disaster roaming control method in this embodiment of this application, after receiving the second indication information, the second network side device may perform the second operation based on the second indication information. The second indication information indicates the terminal to disable disaster roaming. The second operation includes at least one of the following: sending the first message, where the first message includes at least one of the following: the terminal configuration update message, the deregistration request message, and the NAS rejection message; skipping sending the second disaster roaming list provided by the VPLMN, or sending the empty second disaster roaming list provided by the VPLMN; and deleting the disaster roaming-related terminal context. In this way, the terminal disables disaster roaming, in other words, in a case in which the terminal is not allowed to perform disaster roaming, a behavior of the PLMN in which the terminal is located after disaster roaming can be clarified.

Optionally, the sending a first message may include: In a case in which the terminal is executing a second service, the second network side device sends the first message after the second service ends. The second service may be set based on an actual requirement, for example, may be a terminal-specific service. In this way, a case in which the second service that is being executed by the terminal is interrupted due to sending of the NAS rejection message can be avoided.

In some embodiments, the second service may include at least one of the following: an emergency PDU session and a high-priority service. For example, after receiving the second indication information, if the terminal is performing an emergency PDU session and/or a high-priority service, the second network side device such as an AMF sends the NAS rejection message after the emergency PDU session is released and/or the high-priority service ends.

Optionally, the terminal configuration update message may include third indication information, where the third indication information indicates at least one of the following:
disaster roaming not allowed (for example, disaster condition not allowed);
disaster roaming network unavailable (for example, PLMN with disaster condition not allowed);
network unavailable (for example, PLMN not allowed); and
service not allowed (service not allowed).

In this way, the terminal may learn of a configuration update reason by using the third indication information in the terminal configuration update message.

It should be noted that content indicated by the third indication information may be direct or indirect. For example, the third indication information may directly indicate disaster roaming not allowed/disaster roaming network unavailable, or may indicate current network unavailable/service not allowed.

In some embodiments, the third indication information includes one or more cause values. For example, the cause value is a newly added cause value, indicating at least one of the following: disaster roaming not allowed and disaster roaming network unavailable; or the cause value is an existing cause value, indicating at least one of the following: network unavailable and service not allowed.

Optionally, the disaster roaming-related terminal context may include a disaster roaming-related configuration parameter. The disaster roaming-related configuration parameter may include at least one of the following:
--a network resource of the terminal, where, for example, the network resource may include but is not limited to at least one of the following: an air-interface resource, a core network resource, and the like; the air-interface resource is, for example, bearer information, a radio resource control (Radio Resource Control, RRC) connection, and the like; and the core network resource is, for example, an IP number, a port number, or tunnel information;
--a disaster roaming wait range, where, for example, the disaster roaming wait range includes a minimum wait time and a maximum wait time, and the disaster roaming wait range is used by the terminal to access a network providing disaster roaming; and
--a disaster return wait range, where, for example, the disaster return wait range includes a minimum wait time and a maximum wait time, and the disaster return wait range is used by the terminal to return a network in which a disaster happens.

It can be understood that a terminal context in the PLMN, for example, a PLMN-1, in which the terminal is located after performing disaster roaming is different from a terminal context saved in the terminal. For example, a terminal context saved in the PLMN-1 has no disaster roaming indication, and when the disaster roaming-related configuration parameter is deleted, a disaster roaming list provided by an HPLMN cannot be deleted.

The following describes this application with reference to specific scenarios.

### Scenario 1:

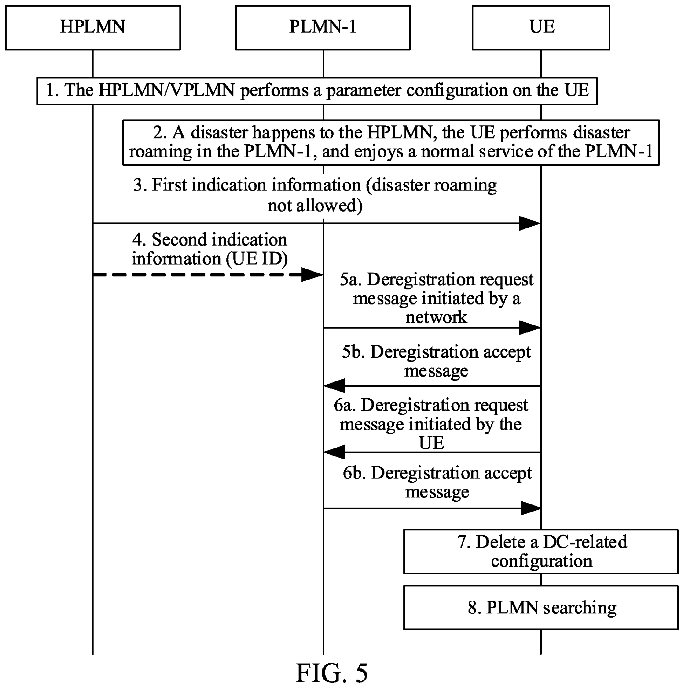

In the scenario 1, a disaster happens to the HPLMN, the HPLMN and the PLMN-1 have a disaster roaming agreement, and UE roams to the PLMN-1 for the disaster roaming; and the HPLMN notifies the UE to update the disaster roaming indication into disable. As shown in FIG. 5, a specific disaster roaming control process includes the following steps.

Step 1: An HPLMN and/or a VPLMN performs a disaster-related parameter configuration on UE. The disaster roaming-related configuration parameter may be as described above. Details are not described herein again.

Step 2: If a disaster happens to the HPLMN, according to a 1-1 configuration parameter and broadcast information of a PLMN-1, the UE registers with the PLMN-1 and enjoys a disaster roaming service, in other words, the UE performs disaster roaming in the PLMN-1, and enjoys a normal service of the PLMN-1.

Step 3: The HPLMN sends first indication information, where the first indication information indicates that the UE does not allow disaster roaming, that is, indicates the UE to disable disaster roaming.

It should be noted that the first indication information is forwarded by using the PLMN-1. In an implementation, a UDM of the HPLMN sends the first indication information to an AMF of the PLMN-1 by using the message Nudm_EventExposure_Notify, Ndm_SDM_ModifySubscription, or Nudm_SDM_Info.

Step 4: Optionally, the HPLMN sends second indication information, where the second indication information indicates that the UE does not allow disaster roaming, that is, indicates the UE to disable disaster roaming.

Optionally, the second indication information further includes a UE identifier ID. For example, the UE ID may be at least one of the following: a GUTI, an SUCI, a PEI, a TMSI, a GPSI, an IMEI, and an IMSI.

Step 5: The PLMN-1 sends a NAS message, where the NAS message may include at least one of the following: a UE configuration update message, a deregistration request message, and a NAS rejection message.

In an implementation, when the NAS message is a deregistration request message, the PLMN-1 sends the deregistration request message to the UE, as shown in 5a in FIG. 5; and receives a deregistration accept message from the UE, as shown in 5b in FIG. 5.

In another implementation, when the NAS message is a UE configuration update message, the UE configuration update message may further include third indication information. The third indication information indicates at least one of the following: disaster roaming not allowed; disaster roaming network unavailable; network unavailable; and service not allowed. Optionally, the third indication information may include one or more cause values.

In another implementation, when the NAS message is a NAS rejection message, it indicates that the UE has initiated a NAS process such as a service request/registration request. The PLMN-1 should have responded to the corresponding service request/registration request, but because the second indication information is received, the PLMN-1 changes to send a corresponding rejection message to reject a NAS request of the UE, and indicates a reason for rejecting the UE, for example, current network unavailable or service not allowed. For example, the NAS rejection message may be a service request rejection message, a registration request rejection message, or the like.

In some embodiments, if the UE is performing an emergency session or a high-priority service, the PLMN-1 (for example, an AMF in the PLMN-1) sends the NAS message after the emergency PDU session is released or the high-priority service ends.

Step 6: As shown in 6a and 6b in FIG. 5, the UE sends a deregistration request message to the PLMN-1, and the PLMN-1 replies with a deregistration accept message.

It should be noted that one or both of step 5 and step 6 may be performed. When one of step 5 and step 6 is performed, the NAS message sent by the PLMN-1 is the deregistration request message, or the UE sends the deregistration request message. When both step 5 and step 6 are performed, the PLMN-1 sends the NAS rejection message and/or the UE configuration update message, and the UE sends the deregistration request message.

In some embodiments, if the UE is performing an emergency session or a high-priority service, the UE performs a deregistration process after the emergency PDU session is released or the high-priority service ends.

Step 7: The UE deletes a disaster roaming-related UE context, including at least one of the following: at least one of the configuration parameters in step 1 and a UE context of the PLMN-1 (for example, a GUTI assigned by the PLMN-1 or disaster roaming area information (for example, a TA list or a cell ID)).

Step 8: The UE searches for/selects a PLMN. It should be noted that the UE may select the PLMN in a 5GMM-REGISTERED mode or a 5GMM-DEREGISTERED mode.

### Scenario 2:

In the scenario 2, the UE normally roams from the HPLMN to the PLMN-1. In this case, a disaster happens to a VPLMN-1, the VPLMN-1 and a PLMN-2 have a disaster roaming agreement, and the UE roams to the PLMN-2 for disaster roaming; and the HPLMN notifies the UE to update the disaster roaming indication into disable.

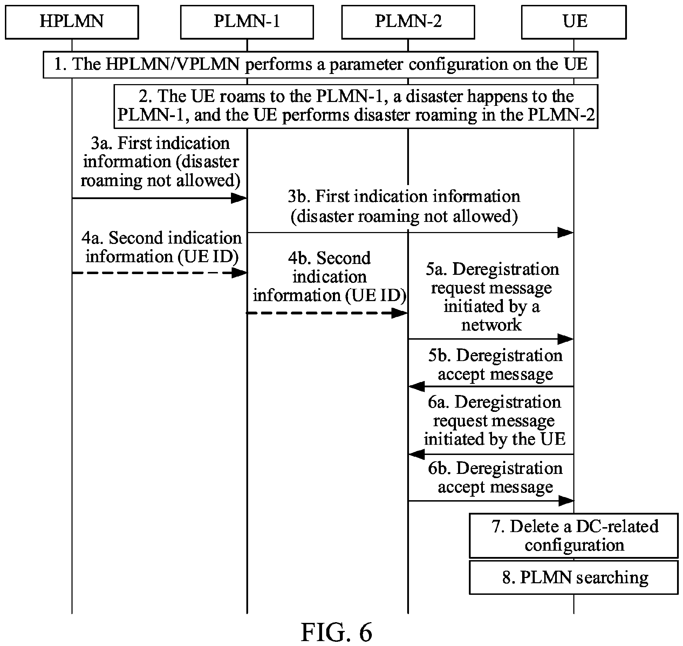

As shown in FIG. 6, a disaster roaming control process in the scenario 2 is basically the same as the disaster roaming control process in the scenario 1, and a difference lies in step 3 and step 4: In step 3, the first indication information is sent by the HPLMN to the PLMN-1 (as shown in 3a in FIG. 6), and then is forwarded by the PLMN-1 to the UE (as shown in 3b in FIG. 6); and in step 4, the second indication information is sent by the HPLMN to the PLMN-1 (as shown in 4a in FIG. 6), and then is forwarded by the PLMN-1 to the PLMN-2 (as shown in 4b in FIG. 6). Other steps are the same as those in FIG. 5. Details are not described herein again.

### Scenario 3:

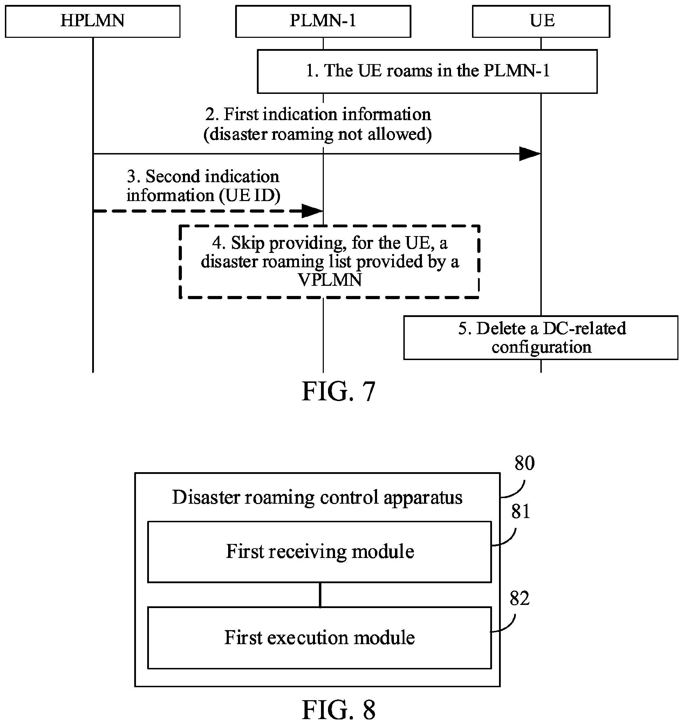

In the scenario 3, the UE normally roams from the HPLMN to the PLMN-1, the UE has not performed disaster roaming, and the PLMN-1 is a VPLMN; and the HPLMN notifies the UE to update the disaster roaming indication into disable. As shown in FIG. 7, a specific disaster roaming control process includes the following steps.

Step 1: A PLMN-1 and an HPLMN have a roam agreement, and UE performs roaming, other than disaster roaming, in the PLMN-1.

Step 2: The HPLMN sends first indication information, where the first indication information indicates that the UE does not allow disaster roaming, that is, indicates the UE to disable disaster roaming.

Step 3: Optionally, the HPLMN sends second indication information, where the second indication information indicates that the UE does not allow disaster roaming, that is, indicates the UE to disable disaster roaming.

Optionally, the second indication information further includes a UE identifier ID. For example, the UE ID may be at least one of the following: a GUTI, an SUCI, a PEI, a TMSI, a GPSI, an IMEI, and an IMSI.

Step 4: Optionally, after receiving an indication from the HPLMN, the PLMN-1 performs at least one of the following:

skipping sending a second disaster roaming list provided by a VPLMN (to the UE), or sending an empty second disaster roaming list provided by a VPLMN (to the UE); and if it is assumed that the VPLMN has provided a disaster roaming list, using a new empty disaster roaming list for update; and

deleting a disaster roaming-related terminal context, where, for example, the terminal context includes the disaster roaming list provided by the VPLMN and a network resource of a terminal.

### Step 5: The UE deletes a disaster roaming-related configuration parameter.

The disaster roaming control method provided in this embodiment of this application may be performed by a disaster roaming control apparatus. In this embodiment of this application, an example in which the disaster roaming control apparatus performs the disaster roaming control method is used to describe the disaster roaming control apparatus provided in the embodiments of this application.

FIG. 8 is a diagram of a structure of a disaster roaming control apparatus according to an embodiment of this application. The apparatus is applied to a terminal. As shown in FIG. 8, the disaster roaming control apparatus 80 includes:
a first receiving module 81, configured to receive first indication information, where the first indication information indicates the terminal to disable disaster roaming; and
a first execution module 82, configured to perform a first operation based on the first indication information, where
the first operation includes at least one of the following:
   deleting a disaster roaming-related terminal context;
   initiating a deregistration process;
   receiving a first message, where the first message includes at least one of the following: a terminal configuration update message, a deregistration request message, and a NAS rejection message; and
   selecting a PLMN.

Optionally, the first execution module 82 is specifically configured to: in a case in which the terminal is executing a first service, initiate the deregistration process after the first service ends.

Optionally, the first service includes at least one of the following: an emergency PDU session and a high-priority service.

Optionally, the first execution module 82 is specifically configured to perform at least one of the following:
after a deregistration accept message is sent, delete the disaster roaming-related terminal context;
after the PLMN is successfully selected, delete the disaster roaming-related terminal context;
after a first PLMN is successfully registered with, delete the disaster roaming-related terminal context, where the first PLMN is another PLMN different from a PLMN in which the terminal resides; and
after a first timer expires, delete the disaster roaming-related terminal context.

Optionally, the terminal context includes a disaster roaming-related configuration parameter, where the disaster roaming-related configuration parameter includes at least one of the following:
a disaster roaming indication, where the disaster roaming indication indicates whether the terminal supports a disaster roaming service;
a first disaster roaming list provided by a home public land mobile network HPLMN;
a second disaster roaming list provided by a visited public land mobile network VPLMN;
a disaster roaming wait range; and
a disaster return wait range.

Optionally, the terminal configuration update message includes third indication information, where the third indication information indicates at least one of the following:
disaster roaming not allowed;
disaster roaming network unavailable;
network unavailable; and
service not allowed.

Optionally, the third indication information includes one or more cause values.

Optionally, the terminal configuration update message includes an empty second disaster roaming list provided by the VPLMN.

Optionally, the first receiving module 81 is specifically configured to perform any one of the following:
receiving the first indication information by using user equipment parameter update UPU information; and
receiving the first indication information by using steering of roaming SOR information.

In this embodiment of this application, the disaster roaming control apparatus 80 may be an electronic device, for example, an electronic device having an operating system; or may be a component in an electronic device, for example, an integrated circuit or a chip. The electronic device may be a terminal, or may be a device other than a terminal. For example, the terminal may include but is not limited to a type of the terminal 11 illustrated above. This is not specifically limited in this embodiment of this application.

The disaster roaming control apparatus 80 provided in this embodiment of this application can implement the various processes implemented in the method embodiment in FIG. 2, and the same technical effects can be achieved. To avoid repetition, details are not described herein again.

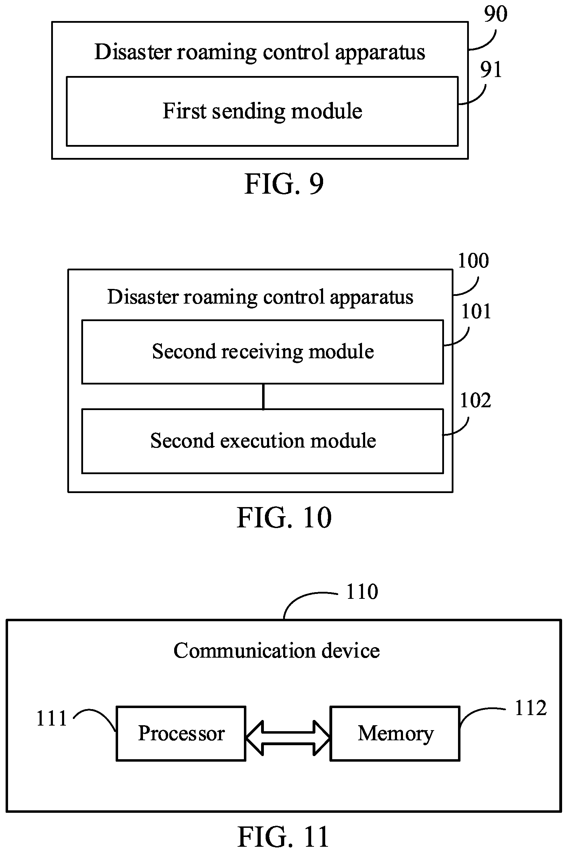

FIG. 9 is a diagram of a structure of a disaster roaming control apparatus according to an embodiment of this application. The apparatus is applied to a first network side device. As shown in FIG. 9, the disaster roaming control apparatus 90 includes:
a first sending module 91, configured to send first indication information to a terminal, where the first indication information indicates the terminal to disable disaster roaming.

Optionally, the disaster roaming control apparatus 90 further includes:
a second sending module, configured to send second indication information to a second network side device, where the second indication information indicates the terminal to disable disaster roaming.

Optionally, the second indication information includes identification information of the terminal.

Optionally, the first sending module 91 is specifically configured to perform any one of the following:
sending the first indication information to the terminal by using UPU information; and
sending the first indication information to the terminal by using SOR information.

Optionally, the disaster roaming control apparatus 90 further includes:
a third sending module, configured to send first configuration information to the terminal, where the first configuration information is used to indicate a disaster-related parameter of the terminal.

The disaster roaming control apparatus 90 provided in this embodiment of this application can implement the various processes implemented in the method embodiment in FIG. 3, and the same technical effects can be achieved. To avoid repetition, details are not described herein again.

FIG. 10 is a diagram of a structure of a disaster roaming control apparatus according to an embodiment of this application. The apparatus is applied to a second network side device. As shown in FIG. 10, the disaster roaming control apparatus 100 includes:
a second receiving module 101, configured to receive second indication information, where the second indication information indicates a terminal to disable disaster roaming; and
a second execution module 102, configured to perform a second operation based on the second indication information, where
the second operation includes at least one of the following:
   sending a first message, where the first message includes at least one of the following: a terminal configuration update message, a deregistration request message, and a NAS rejection message;
   skipping sending a second disaster roaming list provided by a VPLMN, or sending an empty second disaster roaming list provided by a VPLMN; and
   deleting a disaster roaming-related terminal context.

Optionally, the second execution module 102 is specifically configured to: in a case in which it is determined that a terminal is executing a second service, send the first message after the second service ends.

Optionally, the second service includes at least one of the following: an emergency PDU session and a high-priority service.

Optionally, the terminal configuration update message includes third indication information, where the third indication information indicates at least one of the following:
disaster roaming not allowed;
disaster roaming network unavailable;
network unavailable; and
service not allowed.

Optionally, the third indication information includes one or more cause values.

Optionally, the terminal context includes a disaster roaming-related configuration parameter, where the disaster roaming-related configuration parameter includes at least one of the following:
a network resource of the terminal;
a disaster roaming wait range; and
a disaster return wait range.

The disaster roaming control apparatus 100 provided in this embodiment of this application can implement the various processes implemented in the method embodiment in FIG. 4, and the same technical effects can be achieved. To avoid repetition, details are not described herein again.

Optionally, as shown in FIG. 11, an embodiment of this application further provides a communication device 110, including a processor 111 and a memory 112. The memory 112 stores a program or instructions that can be run on the processor 111. For example, when the communication device 110 is a terminal, and when the program or instructions are executed by the processor 111, the steps in the method embodiment shown in FIG. 2 are implemented, and the same technical effects can be achieved. When the communication device 110 is a network side device, and when the program or instructions are executed by the processor 111, the various steps in the method embodiment shown in FIG. 3 or FIG. 4 are implemented, and the same technical effects can be achieved. To avoid repetition, details are not described herein again.

An embodiment of this application further provides a terminal, including a processor and a communication interface. The communication interface is configured to receive first indication information. The first indication information indicates the terminal to disable disaster roaming. The processor is configured to perform a first operation based on the first indication information. The first operation includes at least one of the following: deleting a disaster roaming-related terminal context; initiating a deregistration process; receiving a first message, where the first message includes at least one of the following: a terminal configuration update message, a deregistration request message, and a NAS rejection message; and selecting a PLMN. The terminal embodiment corresponds to the foregoing method embodiment on the terminal side. The implementation processes and implementations of the foregoing method embodiment are all applicable to the terminal embodiment, and the same technical effects can be achieved.

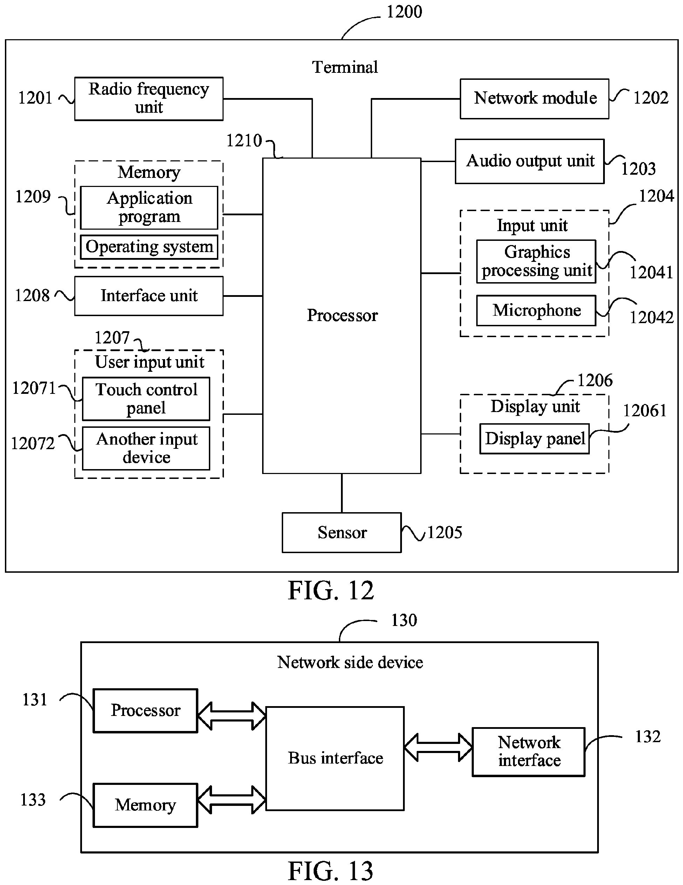

Specifically, FIG. 12 is a diagram of a hardware structure of a terminal according to an embodiment of this application.

The terminal 1200 includes but is not limited to at least some of a radio frequency unit 1201, a network module 1202, an audio output unit 1203, an input unit 1204, a sensor 1205, a display unit 1206, a user input unit 1207, an interface unit 1208, a memory 1209, a processor 1210, and the like.

A person skilled in the art may understand that the terminal 1200 may further include a power supply (for example, a battery) that powers various components. The power supply may be logically connected to the processor 1210 through a power management system, to implement functions such as charging, discharging, and power consumption management through the power management system. The structure of the terminal shown in FIG. 12 does not constitute any limitation on the terminal. The terminal may include more or fewer components than those shown in the figure, or some components may be combined, or a different component arrangement may be used. Details are not described herein.

It should be understood that in this embodiment of this application, the input unit 1204 may include a graphics processing unit (Graphics Processing Unit, GPU) 12041 and a microphone 12042. The graphics processor 12041 processes image data of a static picture or a video obtained by an image capturing apparatus (for example, a camera) in a video capturing mode or an image capturing mode. The display unit 1206 may include a display panel 12061. The display panel 12061 can be configured in a form of a liquid crystal display, an organic light-emitting diode, or the like. The user input unit 1207 includes at least one of a touch control panel 12071 and another input device 12072. The touch control panel 12071 is also referred to as a touchscreen. The touch control panel 12071 may include a touch detection apparatus and a touch controller. The another input device 12072 may include but is not limited to a physical keyboard, a function key (for example, a volume control key or an on/off key), a trackball, a mouse, and a joystick. Details are not described herein.

In this embodiment of this application, after receiving downlink data from a network side device, the radio frequency unit 1201 may transmit the downlink data to the processor 1210 for processing. In addition, the radio frequency unit 1201 may send uplink data to the network side device. Usually, the radio frequency unit 1201 includes but is not limited to an antenna, an amplifier, a transceiver, a coupler, a low noise amplifier, a duplexer, and the like.

The memory 1209 may be configured to store a software program or instructions and various data. The memory 1209 may mainly include a first storage area storing a program or instructions and a second storage area storing data. The first storage area may store an operating system, an application program or instructions (for example, an audio play function or an image play function) required by at least one function, and the like. In addition, the memory 1209 may include a volatile memory or a nonvolatile memory, or the memory 1209 may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), or a direct rambus random access memory (Direct Rambus RAM, DRRAM). In this embodiment of this application, the memory 1209 includes but is not limited to these and any other memories of appropriate types.

The processor 1210 may include one or more processing units. Optionally, the processor 1210 is integrated with an application processor and a modem processor. The application processor mainly processes an operation related to an operating system, a user interface, an application program, and the like. The modem processor mainly processes a wireless communication signal, for example, a baseband processor signal. It can be understood that the modem processor may alternatively not be integrated into the processor 1210.

The radio frequency unit 1201 is configured to receive first indication information, where the first indication information indicates the terminal to disable disaster roaming.

The processor 1210 is configured to perform a first operation based on the first indication information. The first operation includes at least one of the following: deleting a disaster roaming-related terminal context; initiating a deregistration process; receiving a first message, where the first message includes at least one of the following: a terminal configuration update message, a deregistration request message, and a NAS rejection message; and selecting a PLMN.

The terminal 1200 provided in this embodiment of this application can implement the various processes implemented in the method embodiment in FIG. 2, and the same technical effects can be achieved. To avoid repetition, details are not described herein again.

An embodiment of this application further provides a network side device, including a processor and a communication interface. For example, the network side device is a first network side device, and the communication interface is configured to send first indication information to a terminal, where the first indication information indicates the terminal to disable disaster roaming; or the network side device is a second network side device, the communication interface is configured to receive second indication information, where the second indication information indicates the terminal to disable disaster roaming, and the processor is configured to perform a second operation based on the second indication information, where the second operation includes at least one of the following: sending a first message, where the first message includes at least one of the following: a terminal configuration update message, a deregistration request message, and a NAS rejection message; skipping sending a second disaster roaming list provided by a VPLMN, or sending an empty second disaster roaming list provided by a VPLMN; and deleting a disaster roaming-related terminal context. The network side device embodiment corresponds to the foregoing network side device method embodiment. The implementation processes and implementations of the foregoing method embodiment are all applicable to the network side device embodiment, and the same technical effects can be achieved.

Specifically, an embodiment of this application further provides a network side device. As shown in FIG. 13, the network side device 130 includes: a processor 131, a network interface 132, and a memory 133. The network interface 132 is, for example, a common public radio interface (common public radio interface, CPRI).

Specifically, the network side device 130 in this embodiment of the present invention further includes instructions or a program that is stored on the memory 133 and that can be run on the processor 131. The processor 131 invokes the instructions or program in the memory 133 to perform the method performed by the modules shown in FIG. 9 or FIG. 10, and the same technical effects can be achieved. To avoid repetition, details are not described herein again.

An embodiment of this application further provides a readable storage medium. The readable storage medium stores a program or instructions. When the program or instructions are executed by a processor, the processes in the disaster roaming control method embodiment are implemented, and the same technical effects can be achieved. To avoid repetition, details are not described herein again.

The processor is the processor in the terminal in the foregoing embodiment. The readable storage medium includes a computer-readable storage medium, for example, a computer read-only memory ROM, a random access memory RAM, a floppy disk, or an optical disc.

An embodiment of this application further provides a chip. The chip includes a processor and a communication interface. The communication interface is coupled to the processor. The processor is configured to run a program or instructions to implement the processes in the disaster roaming control method embodiment, and the same technical effects can be achieved. To avoid repetition, details are not described herein again.

It should be understood that the chip in this embodiment of this application may also be referred to as a system-level chip, a system chip, a chip system, a system-on-a-chip chip, or the like.

An embodiment of this application further provides a computer program product. The computer program product is stored in a storage medium, the computer program product is executed by at least one processor to implement the processes in the disaster roaming control method embodiment, and the same technical effects can be achieved. To avoid repetition, details are not described herein again.

An embodiment of this application further provides a communication system, including: a terminal, a first network side device, and a second network side device. The terminal may be configured to perform a step of the methods related to the terminal in FIG. 2 and various embodiments of this application. The first network side device may be configured to perform a step of the methods related to the first network side device in FIG. 3 and various embodiments of this application. The second network side device may be configured to perform a step of the methods related to the second network side device in FIG. 4 and various embodiments of this application.

It should be noted that in this specification, the term "comprise", "include", or any other variants thereof are intended to encompass in a non-exclusive mode, so that a process, a method, an object, or an apparatus including a series of elements not only includes those elements, but also includes other elements that are not explicitly listed, or elements that are inherent to such a process, a method, an object, or an apparatus. An element defined by the phrase "including a ..." does not exclude the presence of the same element in the process, method, object, or apparatus including the element, without more restrictions. In addition, it should be noted that the scopes of the methods and apparatus in the embodiments of this application are not limited to performing functions in the shown or discussed order, but may also include performing functions in a substantially simultaneous manner or in a reverse order depending on involved functions. For example, the described methods may be performed in an order different from that described, and various steps may be added, omitted, or combined. Furthermore, features described with reference to some examples may be combined in other examples.

Through the foregoing descriptions of the implementations, a person skilled in the art can clearly understand that the methods in the foregoing embodiments can be implemented by software plus a necessary general hardware platform, and certainly, can also be implemented by hardware, but in many cases the former is the better implementation. Based on such understanding, the technical solutions of the present invention essentially, or the part contributing to the prior art, may be presented in a form of a computer software product. The computer software product is stored in a storage medium (for example, a ROM/RAM, a floppy disk, or an optical disc) including several instructions to enable a terminal device (which may be a mobile phone, a computer, a server, a network device, or the like) to perform the methods described in the embodiments of this application.

The embodiments of this application are described above with reference to the accompanying drawings. However, this application is not limited to the foregoing specific implementations. The foregoing specific implementations are only illustrative and not restrictive. Inspired by this application, a person of ordinary skill in the art can further make many forms without departing from the purpose of this application and the scope protected by the claims, all of which shall fall within the protection scope of this application.

## Claims

1. A disaster roaming control method, comprising:
receiving, by a terminal, first indication information, wherein the first indication information indicates to disable disaster roaming; and
performing, by the terminal, a first operation based on the first indication information, wherein
the first operation comprises at least one of the following:
deleting a disaster roaming-related terminal context;
initiating a deregistration process;
receiving a first message, wherein the first message comprises at least one of the following: a terminal configuration update message, a deregistration request message, and a non-access stratum NAS rejection message; and
selecting a public land mobile network PLMN.

2. The method according to claim 1, wherein the initiating a deregistration process comprises:
in a case in which the terminal is executing a first service, initiating, by the terminal, the deregistration process after the first service ends.

3. The method according to claim 2, wherein the first service comprises at least one of the following:
an emergency protocol data unit PDU session and a high-priority service.

4. The method according to claim 1, wherein the deleting a disaster roaming-related terminal context comprises at least one of the following:
after sending a deregistration accept message, deleting, by the terminal, the disaster roaming-related terminal context;
after successfully selecting the PLMN, deleting, by the terminal, the disaster roaming-related terminal context;
after successfully registering with a first PLMN, deleting, by the terminal, the disaster roaming-related terminal context, wherein the first PLMN is another PLMN different from a PLMN in which the terminal resides; and
after a first timer expires, deleting, by the terminal, the disaster roaming-related terminal context.

5. The method according to claim 1, wherein the terminal context comprises a disaster roaming-related configuration parameter, wherein the disaster roaming-related configuration parameter comprises at least one of the following:
a disaster roaming indication, wherein the disaster roaming indication indicates whether the terminal supports a disaster roaming service;
a first disaster roaming list provided by a home public land mobile network HPLMN;
a second disaster roaming list provided by a visited public land mobile network VPLMN;
a disaster roaming wait range; and
a disaster return wait range.

6. The method according to claim 1, wherein the terminal configuration update message comprises third indication information, wherein the third indication information indicates at least one of the following:
disaster roaming not allowed;
disaster roaming network unavailable;
network unavailable; and
service not allowed.

7. The method according to claim 6, wherein the third indication information comprises one cause value.

8. The method according to claim 1, wherein the terminal configuration update message comprises an empty second disaster roaming list provided by the VPLMN.

9. The method according to any one of claims 1 to 8, wherein the receiving first indication information comprises any one of the following:
receiving, by the terminal, the first indication information by using user equipment parameter update UPU information; and
receiving, by the terminal, the first indication information by using steering of roaming SOR information.

10. A disaster roaming control method, comprising:
sending, by a first network side device, first indication information to a terminal, wherein the first indication information indicates to disable disaster roaming.

11. The method according to claim 10, further comprising:
sending, by the first network side device, second indication information to a second network side device, wherein the second indication information indicates the terminal to disable disaster roaming.

12. The method according to claim 11, wherein the second indication information comprises identification information of the terminal.

13. The method according to any one of claims 10 to 12, wherein the sending first indication information to a terminal comprises any one of the following:
sending, by the first network side device, the first indication information to the terminal by using UPU information; and
sending, by the first network side device, the first indication information to the terminal by using SOR information.

14. The method according to any one of claims 10 to 13, wherein before the sending, by a first network side device, first indication information to a terminal, the method further comprises:
sending, by the first network side device, first configuration information to the terminal, wherein the first configuration information is used to indicate a disaster-related parameter of the terminal.

15. A disaster roaming control method, comprising:
receiving, by a second network side device, second indication information, wherein the second indication information indicates to disable disaster roaming by using a terminal; and
performing, by the second network side device, a second operation based on the second indication information, wherein
the second operation comprises at least one of the following:
sending a first message, wherein the first message comprises at least one of the following: a terminal configuration update message, a deregistration request message, and a NAS rejection message;
skipping sending a second disaster roaming list provided by a VPLMN, or sending an empty second disaster roaming list provided by a VPLMN; and
deleting a disaster roaming-related terminal context.

16. The method according to claim 15, wherein the sending a first message comprises:
in a case in which the terminal is executing a second service, sending, by the second network side device, the first message after the second service ends.

17. The method according to claim 16, wherein the second service comprises at least one of the following:
an emergency PDU session and a high-priority service.

18. The method according to claim 15, wherein the terminal configuration update message comprises third indication information, wherein the third indication information indicates at least one of the following:
disaster roaming not allowed;
disaster roaming network unavailable;
network unavailable; and
service not allowed.

19. The method according to claim 18, wherein the third indication information comprises one cause value.

20. The method according to claim 15, wherein the terminal context comprises a disaster roaming-related configuration parameter, wherein the disaster roaming-related configuration parameter comprises at least one of the following:
a network resource of the terminal;
a disaster roaming wait range; and
a disaster return wait range.

21. A disaster roaming control apparatus, comprising:
a first receiving module, configured to receive first indication information, wherein the first indication information indicates to disable disaster roaming; and
a first execution module, configured to perform a first operation based on the first indication information, wherein
the first operation comprises at least one of the following:
deleting a disaster roaming-related terminal context;
initiating a deregistration process;
receiving a first message, wherein the first message comprises at least one of the following: a terminal configuration update message, a deregistration request message, and a NAS rejection message; and
selecting a PLMN.

22. A disaster roaming control apparatus, comprising:
a first sending module, configured to send first indication information to a terminal, wherein the first indication information indicates to disable disaster roaming.

23. A disaster roaming control apparatus, comprising:
a second receiving module, configured to receive second indication information, wherein the second indication information indicates to disable disaster roaming by using a terminal; and
a second execution module, configured to perform a second operation based on the second indication information, wherein
the second operation comprises at least one of the following:
sending a first message, wherein the first message comprises at least one of the following: a terminal configuration update message, a deregistration request message, and a NAS rejection message;
skipping sending a second disaster roaming list provided by a VPLMN, or sending an empty second disaster roaming list provided by a VPLMN; and
deleting a disaster roaming-related terminal context.

24. A terminal, comprising a processor and a memory, wherein the memory stores a program or instructions that can be run on the processor, and when the program or instructions are executed by the processor, a step of the disaster roaming control method according to any one of claims 1 to 9 is implemented.

25. A network side device, comprising a processor and a memory, wherein the memory stores a program or instructions that can be run on the processor, and when the program or instructions are executed by the processor, a step of the disaster roaming control method according to any one of claims 10 to 14 is implemented, or a step of the disaster roaming control method according to any one of claims 15 to 20 is implemented.

26. A readable storage medium, wherein the readable storage medium stores a program or instructions, when the program or instructions are executed by the processor, a step of the disaster roaming control method according to any one of claims 1 to 9 is implemented, a step of the disaster roaming control method according to any one of claims 10 to 14 is implemented, or a step of the disaster roaming control method according to any one of claims 15 to 20 is implemented.
